# FASCICULE DE BREVET EUROPEEN

(11) **EP 0 482 991 B1**
(45) Date de publication et mention de la délivrance du brevet: **07.06.1995**
(21) Numéro de dépôt: 91402796.6
(22) Date de dépôt: 21.10.1991
(51) Int. Cl.: B65D 88/68, B65D 88/28, B65G 69/04

(54) **Appareillage pour le remplissage d'un récipient par un produit solide divisé**
Vorrichtung zum Füllen eines Behälters mit rieselfähigem Gut
Device for filling a container with a particulate solid product

(30) Priorité: 22.10.1990 FR 9013162
(43) Date de publication de la demande: 29.04.1992
(73) Titulaire: INSTITUT FRANCAIS DU PETROLE, 92502 Rueil-Malmaison (FR)
(72) Inventeur: Poussin, Bernard, F-78420 Carrieres Sur Seine (FR); Lumbroso, Daniel, F-92500 Rueil Malmaison (FR)

(56) Documents cités:
- DE-A- 2 703 329
- GB-A- 2 168 330
- US-A- 4 433 707

## Description

Le remplissage des récipients par des particules solides (solides granuleux) s'effectue généralement par un transvasement du solide à l'aide d'une trémie et/ou d'une manche, soit manuellement, soit mécaniquement, soit par transfert pneumatique.

En règle générale, il est d'un intérêt majeur d'introduire le maximum de produit dans un volume donné, et ceci aussi bien pour diminuer le coût du stockage que pour d'autres motifs spécifiques, comme par exemple homogénéiser ce stockage ou diminuer le volume d'air ou de gaz du conteneur.

Les stockages usuels concernent les grains de céréales (silos), de produits alimentaires destinés à la consommation ou au bétail, à l'agroalimentaire, aux engrais, aux produits chimiques, aux granulés de plastique, aux produits pharmaceutiques et/ou cosmétiques, ou tout autre solide divisé (grains ou dragées, ou granulés extrudés, comprimés, agglomérés, concassés, etc.). Leur autre domaine d'application est constitué par des récipients ou des réacteurs chimiques destinés à être remplis par des particules solides : catalyseurs, absorbants, réactifs, garnissages, remplissages divers...

Dans ce cas, il est presque toujours avantageux de placer le maximum de produit solide à l'intérieur du réacteur car cela permet d'augmenter l'activité par unité de volume et donc l'efficacité de la durée utile du service (durée de cycle ou durée de vie) grâce à l'espacement des arrêts de l'appareillage. Il s'agit également d'éviter un retassement ultérieur du solide divisé, lequel s'effectue toujours de façon inhomogène ce qui favorise les passages préférentiels indésirables du fluide dans le cas d'un réacteur chimique.

L'utilisation d'une tête de dispersion placée sous la trémie, composée de plateaux, de préférence trois ou quatre plateaux, et fixée sur un arbre entraîné par un moteur solidaire de la trémie est un procédé connu. Ainsi le brevet GB 2 168 330 porte sur l'utilisation d'un seul plateau muni de secteurs en arc de cercle de rayons différents ; le brevet US 4 433 707 présente trois disques de rayons décroissants (le plus grand étant le plus près de la trémie). La précédente demande de brevet de la demanderesse EP-A-470 142 (art antérieur selon l'article 54(3) CBE) concerne l'utilisation d'au moins trois plateaux de rayons différents.

Le brevet DE 2 703 329 définissant l'art antérieur le plus proche présente, lui, trois disques annulaires de diamètres distincts tournant grâce à une vis sans fin qui assure l'alimentation de la trémie, avec un disque de dosage comportant des fentes radiales entre la vis sans fin et le disque annulaire supérieur.

De nombreux autres procédés sont aussi utilisés, assurant tous un remplissage plus ou moins homogène des récipients (silos, réacteurs).

Malgré tout, l'utilisation de l'un quelconque des procédés précédents ne permet pas de remplir de façon homogène et complète les différentes configurations des récipients.

Ainsi, le remplissage des récipients de faible diamètre reste très difficile à réaliser ; en effet, dans le cas où la vitesse de rotation de l'arbre est peu importante, le(s) plateau(x) inférieur (s) ne communique(nt) pas une vitesse linéaire suffisante aux particules qui le(s) jonchent pour qu'elles tombent dans le récipient et alors ce(s) plateau(x) s'engorge(nt). Lorsque la vitesse diminue et atteint une valeur suffisamment faible, le plateau inférieur s'engorge le premier, puis le plateau qui lui est immédiatement supérieur et ainsi de suite si la vitesse continue à diminuer. Alors le remplissage ne se fait plus de manière homogène : il se forme une dépression au centre du lit de particules dans le récipient.

Il existe donc une vitesse minimale de rotation, pour un débit donné. Au-dessous de cette vitesse, le débit doit être réduit pour éviter l'engorgement des plateaux inférieurs.

Ce problème d'engorgement d'au moins un plateau inférieur se pose aussi dans le cas du démarrage du remplissage du récipient.

De plus, dans le cas général, il n'est pas possible de se conformer au débit de chargement souhaitable ; par exemple s'il est trop important la vitesse de rotation de l'arbre devra être augmentée en conséquence, ce qui modifiera la répartition des particules au sein du récipient : il y aura plus de particules à la périphérie qu'au centre.

D'autre part, un même appareil (basé sur l'un desdits procédés) ne permet pas de remplir des récipients de diamètres très différents sans changement de la tête de dispersion.

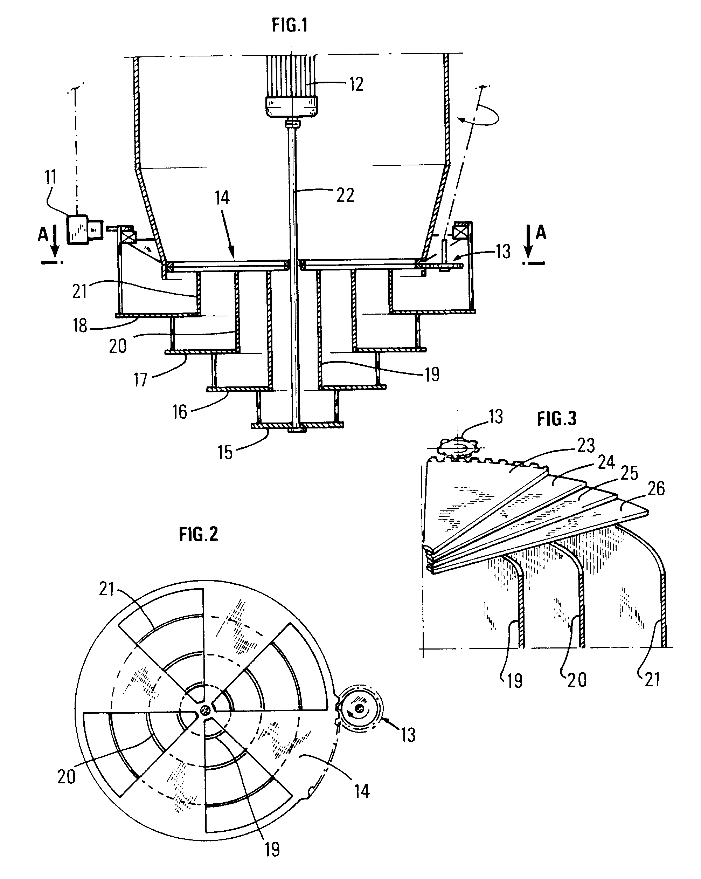

L'objet de l'invention est de fournir un dispositif qui permette de rendre indépendants le débit de chargement des particules et la vitesse de rotation. Ainsi on utilise au moins un **moyen de distribution pouvant former** diaphragme, placé à la sortie de la trémie et avant les plateaux **rotatifs** de distribution des particules, sur lequel se trouvent des ouvertures à travers lesquelles passent les particules de solide divisé, **c'est-à-dire permettant par au moins une ouverture le passage du solide divisé de la trémie aux plateaux rotatifs, ledit moyen de distribution étant caractérisé en ce que d'une part l'ouverture et d'autre part la forme de la section de passage du solide divisé sont réglables par au moins un moyen de réglage qui tient compte principalement du diamètre dudit récipient, le réglage de l'ouverture permettant de régler le débit du solide divisé et celui de la forme permettant d'alimenter sélectivement les plateaux**. Cet agencement permet de moduler l'influence du débit de chargement sur la vitesse de rotation de l'arbre. La figure n° 1 permet de montrer par exemple le positionnement du diaphragme par rapport à l'appareil de chargement dans le cas particulier du dispositif selon la précédente demande de brevet EP-A-470 142 de la demanderesse ; un ensemble de plateaux (15, 16, 17, 18) pivote autour d'un axe (22), mobile grâce à un moteur (12); un ensemble de tubes concentriques (19, 20, 21) régule le flux de particules ; le **moyen de distribution** (14) a son ouverture réglée par le dispositif (13).

L'invention s'applique en particulier à tout **moyen de distribution dont le moyen de réglage permet de couvrir** proportionnellement la même surface pour chaque plateau **rotatif**, c'est-à-dire ayant une forme telle que le rapport entre la surface qu'il couvre pour un plateau rotatif et la surface qu'il couvre pour un autre plateau est égal au rapport entre les surfaces desdits plateaux ; ce qui revient à couvrir le même pourcentage de surface pour chaque plateau **rotatif**, de façon à garantir l'homogénéité de répartition.

L'invention s'applique aussi à **tout moyen de distribution dont le moyen de réglage comporte une** couronne pleine qui permet d'occulter en partie le chargement de l'un au moins des plateaux **rotatifs**, c'est-à-dire une couronne couvrant l'espace délimité par le cercle dont le rayon est la distance minimale entre l'axe de rotation de l'arbre qui guide les plateaux **rotatifs** (appelé axe central) et le bord d'un plateau **rotatif** (ladite distance peut être nulle dans le cas du plateau **rotatif** inférieur), et par le cercle de rayon la distance maximale entre l'axe central et le bord dudit plateau **rotatif** ou le bord d'un plateau **rotatif** supérieur (sauf dans le cas où ledit plateau **rotatif** est le plateau **rotatif** supérieur). Plus généralement, l'invention s'applique à **tout moyen de distribution dont le moyen de** r**églage comporte une** couronne de surface supérieure ou égale à la surface formée par la projection sur un plan perpendiculaire à l'axe central du ou des plateau(x) **rotatif(s)** qu'elle doit obturer.

L'invention s'applique aussi à toute combinaison d'au moins deux **moyens de distribution** tels que décrits dans la présente description.

Le **moyen de distribution** peut être de forme variée dans le cas d'un **moyen de réglage permettant de couvrir** proportionnellement la même surface pour chaque plateau **rotatif**; généralement **le moyen de réglage comporte** un plateau (surface plane de forme quelconque), qui peut être circulaire (c'est-à-dire un disque), et sur lequel se trouve au moins une ouverture. Les figures n° 2, 3, 4 et 5 illustrent les principaux type de **moyens de distribution** envisagés. Elles correspondent à des modes de réalisations préférées mais elles ne doivent pas être considérées comme étant limitatives.

Une des réalisations préférées pour le **moyen de distribution** est **un moyen de réglage comportant** un plateau de forme quelconque (circulaire -i.e. un disque- ou non) comportant des ouvertures réparties de la façon suivante ; un ensemble de N secteurs de forme telle que chaque secteur est une portion de disque, lequel disque a un rayon supérieur ou égal à la plus grande distance entre le bord du plateau **rotatif** supérieur et le centre dudit plateau et a un centre confondu avec l'axe central, chaque disque de rayon différent ou égal à celui du secteur voisin, les secteurs étant disposés régulièrement autour de l'axe central. Par portion de disque, on entend un arc de cercle d'angle compris entre 15 et 45°. N est compris entre 2 et 20, de préférence entre 2 et 5. Les secteurs sont disposés régulièrement autour de l'axe central, chaque secteur étant fictivement superposable à un autre secteur par une rotation d'angle de valeur proportionnelle à (360/N)°. Les secteurs peuvent être mis en place par l'extérieur grâce à des ajouts d'une forme pleine (qui peut être incluse dans l'appareillage avant l'opération de chargement), ou de formes pleines indépendantes ou non les unes des autres dont l'assemblage conduit à la disposition des ouvertures tel que décrit ci-dessus.

La figure n° 2 montre un **moyen de distribution** selon la section A-A définie sur la figure n° 1 ; c'est un plateau délimitant quatre ouvertures (ou secteurs) d'arc de cercle d'angle égal à 45°.

L'invention concerne aussi l'utilisation d'**un moyen de réglage comportant** au moins deux et par exemple au plus huit plateaux à secteurs tels que décrits ci-dessus, de préférence au moins deux et au plus cinq, les uns au-dessus des autres, **adaptés à** coulisser les uns par rapport aux autres et ainsi à découvrir au moins la surface correspondant au disque formé en prenant la plus grande distance entre le bord du plateau **rotatif** supérieur et l'axe central comme rayon, et en le centrant sur ledit axe ; ladite surface est couverte de façon imaginée, en projetant l'ensemble des secteurs sur un même plan perpendiculaire à l'axe central.

La figure n° 3 montre partiellement un ensemble de quatre plateaux identiques (23, 24, 25, 26) tels que définis à la figure n° 2.

Le débit total du **moyen de distribution** comprenant l'ensemble de secteurs utilisés les uns au-dessus des autres comme décrit ci-dessus peut ainsi varier entre 0 % (cas de l'obturation de la partie basse de la trémie) et 100 % (cas de l'absence de diaphragme) ; il peut être réglé en continu.

Les **moyens de réglage** peuvent aussi **comporter** des plateaux, par exemple des disques de rayons supérieurs ou égaux à la plus grande distance entre le bord du plateau **rotatif** supérieur et l'axe central, centrés sur ledit axe, et percés de trous disposés selon une symétrie centrale par rapport à l'axe central. La forme des trous peut être quelconque, mais il est préféré au moins l'une des trois formes suivantes :
- un petit disque évidé,
- une forme oblongue, ladite forme oblongue étant créée de la façon suivante : on prend deux petits disques de même rayon dont les centres, à même distance d de l'axe central, délimitent avec ledit axe un angle de 90° au maximum, on considère tout petit disque de même rayon dont le centre se trouve à la même distance d de l'axe central et sur l'arc de cercle délimité par les centres des disques précédents (y compris lesdits disques), et on évide selon tous ces petits disques,
- une forme elliptique, ladite forme elliptique étant créée de la façon suivante : on prend deux petits disques de même rayon dont les centres, à même distance d de l'axe central, délimitent avec ledit axe un angle de 90° au maximum, on considère tout petit disque de même rayon dont le centre se trouve sur la portion de droite reliant les centres des disques précédents (y compris lesdits disques), et on évide selon tous ces petits disques.

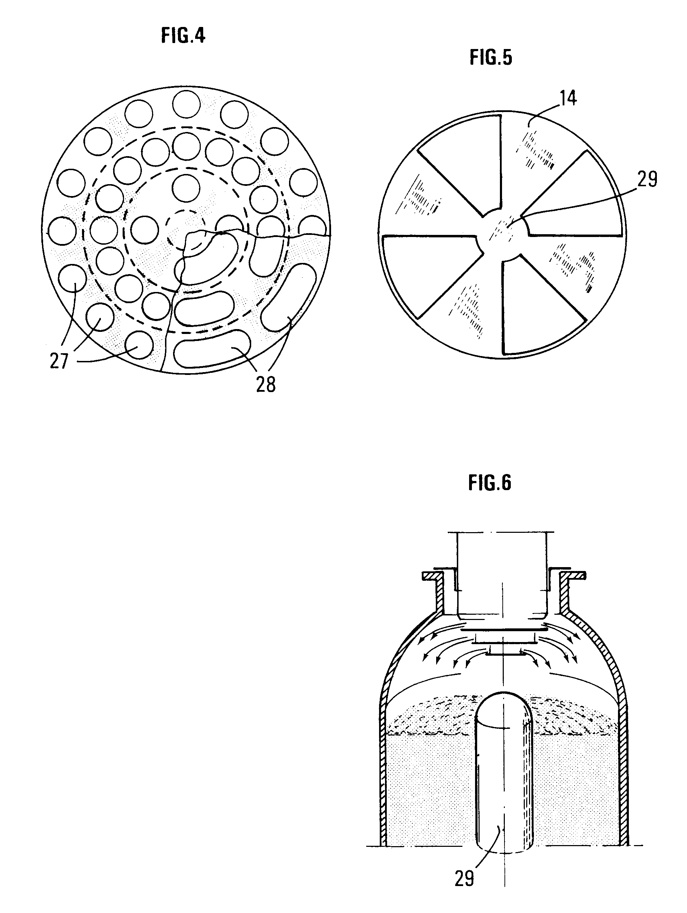

La figure n° 4 illustre deux de ces formes préférées lorsque le **moyen de distribution** est par exemple un disque, à savoir le trou circulaire (27) et la forme oblongue (28).

Les **moyens de distribution** sont susceptibles de présenter des modifications temporaires en vue d'adapter le remplissage à un type de réacteur particulier sans avoir l'obligation de changer les plateaux.

Ces **moyens de** réglages particuliers sont explicités ci-après :
* dans le cas du chargement d'un réacteur avec cheminée centrale, la partie centrale du **moyen de distribution** peut être fermée, par l'ajout d'une forme plane de section correspondant à la section de la cheminée centrale ; cette forme est en général circulaire (disque).

Les figures n° 5 et 6 illustrent un exemple d'utilisation de ce **moyen de** réglage dans le cas d'un réacteur avec une cheminée centrale (29).
* dans le cas du chargement d'un réacteur de faible diamètre, il est possible d'obturer une partie du **moyen de distribution**, de façon à ne pas alimenter tous les plateaux ; ceci permet de remplir le récipient beaucoup plus haut : en effet, à partir d'une certaine hauteur, la vitesse de rotation doit être augmentée pour remplir la périphérie du récipient, et alors beaucoup plus de particules sont projetées sur ladite périphérie, surtout en provenance des plateaux **rotatifs** supérieurs, ce qui a tendance à sur-alimenter cette périphérie ; ceci peut être réalisé en n'alimentant pas le(s) plateau(x) **rotatif(s)** supérieur(s), c'est-à-dire d'abord le plateau de plus grande surface, puis s'il le faut le plateau **rotatif** situé juste au-dessous et ainsi de suite s'il le faut de façon à pouvoir fonctionner finalement avec un seul plateau **rotatif**, le plateau inférieur, grâce à au moins **un moyen de réglage comportant** une couronne de surface supérieure ou égale à la surface formée par la projection sur un plan perpendiculaire à l'axe central du ou des plateau(x) **rotatif(s)** qu'elle doit obturer.

Enfin, il convient de noter que la présence d'au moins un instrument de mesure au sein du récipient (canne thermométrique, tube de refroidissement du lit ou autre pièce interne) ne perturbe pas de façon notable le remplissage du récipient.

Les exemples suivants permettent d'illustrer la présente invention, sans toutefois en limiter la portée.

### EXEMPLES

Tous les exemples ont été réalisés dans le cas de chargements de réacteurs avec le catalyseur "RG 482" de la Société "PROCATALYSE", grâce à un appareillage tel que décrit dans la précédente demande de brevet de la demanderesse, c'est-à-dire qui comprend :
- un moteur solidaire de la trémie,
- un arbre vertical entraîné par le moteur,
- une tête de dispersion mise en rotation par ledit moteur comportant quatre plateaux,
- une série de trois tubes fixes en forme de cylindres concentriques, empilés et coaxiaux, démontables et coulissants, dans lesquels les solides divisés s'écoulent par gravité, chaque cylindre ayant son extrémité inférieure au-dessus d'un plateau **rotatif**, tous les cylindres ayant leur extrémité supérieure au même niveau et en dessous du **moyen de distribution formant** diaphragme, le diamètre de chaque tube étant inférieur au diamètre du tube qui le surmonte et supérieur au diamètre du tube qu'il surmonte, chaque plateau **rotatif** étant ainsi associé à un tube autour duquel il tourne, le plateau **rotatif** inférieur tournant autour de l'arbre, une partie des solides divisés s'écoulant de chaque tube sur le plateau **rotatif** duquel il débouche, les solides divisés qui tombent sur ce plateau **rotatif** étant soumis à un mouvement rotatif dû à la rotation du plateau sur lequel ils sont tombés, la force centrifuge engendrée par la rotation des plateaux permettant d'éjecter le solide **divisé** à des distances différentes de l'axe de l'arbre.

### EXEMPLE N° 1 - Relation entre le débit des grains et la vitesse de rotation

Dans cet exemple, lors de chaque chargement la vitesse et le débit ont été ajustés de façon à assurer un chargement normal, c'est-à-dire un remplissage régulier et homogène assurant un niveau quasiment horizontal du lit de particules.

La hauteur H est la distance entre le plateau supérieur de l'appareillage et le lit du catalyseur ; ainsi H diminue au fur et à mesure du remplissage. Le diamètre du réacteur est noté D.

Lors du remplissage homogène d'un réacteur cylindrique de diamètre D, la vitesse de rotation et le débit ont été mesurés pour différents pourcentages d'ouvertures du diaphragme (le % est le rapport entre l'aire des ouvertures par lesquelles les particules peuvent passer en présence du diaphragme et la même aire en l'absence de diaphragme). Pour chaque %, deux sortes de **moyens de distribution formant** diaphragmes ont été utilisés : un diaphragme A comportant un plateau ou deux plateaux superposés comportant des secteurs ; ou bien un disque B comportant des ouvertures sous forme de petits cercles (le rapport entre le rayon du disque et le rayon des cercles est de 11).

Il a été constaté que dans chaque cas (i.e. pour chaque % différent) les résultats sont les mêmes ; ainsi, c'est le % d'ouverture du diaphragme qui joue un rôle et non la forme particulière du diaphragme.

De plus, tous les chargements de cet exemple ont été réalisés en alimentant tous les plateaux **rotatifs**, c'est-à-dire que dans cet exemple il n'a pas été utilisé de diaphragme en forme de couronne.

### a) Cas d'une ouverture à 100 %

Les résultats des mesures sont donnés dans le tableau ci-dessous (Tableau 1) :

**Tableau 1**

| | D = 1, 5 m | | D = 2, 5 m | | D = 3, 5 m | |
|---|---|---|---|---|---|---|
| hauteur H (m) | vitesse (tours/mn) | débit (tonnes/h) | vitesse (tours/mn) | débit (tonnes/h) | vitesse (tours/mn) | débit (tonnes/h) |
| 6 | 50 | 5,35 | 80 | 8,00 | 110 | 7,98 |
| 4 | 55 | 6,30 | 86 | 7,97 | 117 | 7,95 |
| 2 | 70 | 8,05 | 112 | 7,98 | 147 | 8,00 |
| 1 | 95 | 8,02 | 135 | 8,05 | 195 | 8,10 |

Dans le cas du réacteur de diamètre 1,5 m, il apparaît que pour remplir le réacteur de façon quasi-homogène la vitesse doit être diminuée jusqu'à une valeur inférieure à la vitesse minimale en dessous de laquelle il y a engorgement à débit constant (calculée égale à 68 tours/mn), et alors on doit diminuer le débit pour obtenir un remplissage homogène. Ainsi le débit dépend de la vitesse de rotation.

### b) Cas d'une ouverture à 75 %

Le diaphragme A est composé d'un plateau délimitant quatre secteurs de 45° d'ouverture.

Les résultats des mesures sont donnés dans le tableau ci-dessous (Tableau 2) :

**Tableau 2**

| | D = 1,5 m | | D = 2, 5 m | | D = 3, 5 m | |
|---|---|---|---|---|---|---|
| hauteur H (m) | vitesse (tours/mn) | débit (tonnes/h) | vitesse (tours/mn) | débit (tonnes/h) | vitesse (tours/mn) | débit (tonnes/h) |
| 6 | 50 | 5,34 | 80 | 6,02 | 110 | 6,01 |
| 4 | 55 | 6,00 | 86 | 5,97 | 117 | 6,00 |
| 2 | 70 | 6,01 | 112 | 5,96 | 147 | 5,98 |
| 1 | 95 | 5,97 | 135 | 6,05 | 195 | 5,99 |

Dans le cas du réacteur de diamètre 1,5 m, il apparaît que pour remplir le réacteur de façon quasi-homogène le débit est encore lié à la vitesse de rotation. Selon l'invention, il est alors possible de diminuer encore le pourcentage d'ouverture.

### c) Cas d'une ouverture à 50 %

Le diaphragme A est composé d'un plateau délimitant quatre secteurs de 45° d'ouverture.

Les résultats des mesures sont donnés dans le tableau ci-dessous (Tableau 3).

**Tableau 3**

| | D = 1,5 m | | D = 2, 5 m | | D = 3, 5 m | |
|---|---|---|---|---|---|---|
| hauteur H (m) | vitesse (tours/mn) | débit (tonnes/h) | vitesse (tours/mn) | débit (tonnes/h) | vitesse (tours/mn) | débit (tonnes/h) |
| 6 | 50 | 4,01 | 80 | 3,96 | 110 | 3,95 |
| 4 | 55 | 4,05 | 86 | 4,00 | 117 | 4,02 |
| 2 | 70 | 3,98 | 112 | 4,02 | 147 | 3,95 |
| 1 | 95 | 4,00 | 135 | 3,96 | 195 | 4,00 |

Pour le remplissage de ces trois réacteurs, le débit est indépendant de la vitesse de rotation.

### d) Cas d'une ouverture à 25 %

Le diaphragme A est composé de deux plateaux délimitant chacun quatre secteurs de 45° d'ouverture, lesdits plateaux étant superposés rigoureusement puis décalés de 22,5°.

Les résultats des mesures sont donnés dans le tableau ci-dessous (Tableau 4).

**Tableau 4**

| | D = 1,5 m | | D = 2, 5 m | | D = 3, 5 m | |
|---|---|---|---|---|---|---|
| hauteur H (m) | vitesse (tours/mn) | débit (tonnes/h) | vitesse (tours/mn) | débit (tonnes/h) | vitesse (tours/mn) | débit (tonnes/h) |
| 6 | 50 | 1,99 | 80 | 2,04 | 110 | 2,00 |
| 4 | 55 | 1,98 | 86 | 1,95 | 117 | 2,01 |
| 2 | 70 | 2,01 | 112 | 2,00 | 147 | 1,98 |
| 1 | 95 | 1,97 | 135 | 2,02 | 195 | 2,03 |

Pour le remplissage de ces trois réacteurs, le débit est indépendant de la vitesse de rotation.

### EXEMPLE n° 2

Dans cet exemple, le **moyen de distribution forme un** diaphragme **qui** est en forme de couronne de façon à ne pas alimenter tous les plateaux **rotatifs**.
D'après le diamètre du réacteur, il a été établi le nombre de plateaux **rotatifs** à alimenter de façon à obtenir un remplissage homogène.
Les plateaux alimentés par le diaphragme sont soit le plateau **rotatif** inférieur (cas de 1 plateau **rotatif** alimenté), soit les deux plateaux **rotatifs** les plus bas (cas de 2 plateaux **rotatifs** alimentés), soit tous les plateaux **rotatifs** à l'exception du plateau **rotatif** supérieur (cas de 3 plateaux **rotatifs**), soit l'ensemble des plateaux **rotatifs** (cas de 4 plateaux **rotatifs** alimentés).

Les résultats des mesures sont donnés dans le tableau ci-dessous (Tableau 5).

**Tableau 5**

| diamètre du réacteur | nombre de plateaux **rotatifs** alimentés par le diaphragme | pourcentage d'ouverture |
|---|---|---|
| de 3 à 4, 5 m | 4 | 100 % |
| de 2 à 3 m | 3 | 56 % |
| de 1 à 2 m | 2 | 25 % |
| de 0,5 à 1 m | 1 | 6 % |

## Revendications

1. Appareillage pour le remplissage d'un récipient par au moins un solide divisé comportant :
- une trémie d'alimentation,
- une tête de dispersion comportant une série de plateaux (15, 16, 17, 18), sensiblement parallèles et coaxiaux par rapport à un axe central (22), disposés les uns au-dessous des autres et dont la surface va en diminuant depuis le plateau supérieur (18) jusqu'au plateau inférieur (15), la distance entre le bord et l'axe central pouvant varier pour un même plateau, l'ensemble étant conçu de telle sorte que chaque plateau à l'exception du plateau inférieur (15) comporte au moins une ouverture qui permet l'alimentation par gravité du plateau situé immédiatement au-dessous, le plateau inférieur (15) pouvant lui-même comporter au moins une ouverture de façon à alimenter le centre du récipient, lesdits plateaux étant animés d'un mouvement rotatif qui permet l'éjection dudit solide divisé par force centrifuge, la vitesse angulaire de rotation desdits plateaux étant variable,
- au moins un moyen de distribution (14) permettant par au moins une ouverture le passage du solide divisé de la trémie aux plateaux rotatifs, ledit moyen étant placé à la sortie de la trémie et avant les plateaux rotatifs et étant caractérisé en ce que d'une part l'ouverture et d'autre part la forme de la section de passage du solide divisé sont réglables par au moins un moyen de réglage qui tient compte principalement du diamètre dudit récipient, le réglage de l'ouverture permettant de régler le débit du solide divisé et celui de la forme permettant d'alimenter sélectivement les plateaux.

2. Appareillage selon la revendication 1, caractérisé en ce que ledit moyen de réglage comporte au moins un plateau comprenant entre 2 et 20 ouvertures, ladite ouverture étant comprise dans un secteur angulaire d'angle compris entre 15 et 45° et de centre confondu avec l'axe central, lesdits secteurs étant disposés régulièrement autour de l'axe central.

3. Appareillage selon la revendication 2 dans lequel on utilise entre 2 et 5 plateaux à secteurs, les uns au-dessus des autres.

4. Appareillage selon la revendication 3 tel que lesdits plateaux sont adaptés à coulisser les uns par rapport aux autres.

5. Appareillage selon l'une des revendications 1 à 4 tel que ledit moyen de réglage comporte une couronne couvrant l'espace délimité par le cercle dont le rayon est la distance minimale entre l'axe central et le bord dudit moyen de distribution, et par le cercle de rayon la distance maximale entre l'axe central et le bord d'un plateau rotatif.

6. Appareillage selon la revendication 1 tel que ledit moyen de réglage comporte au moins un plateau centré sur ledit axe et percé de trous disposés selon une symétrie centrale par rapport à l'axe central.

7. Appareillage selon la revendication 6 dans lequel chaque trou a au moins l'une des trois formes suivantes :
- un petit disque évidé,
- une forme oblongue,
- une forme elliptique.

8. Appareillage selon l'une des revendications 1 à 7 tel que ledit moyen de réglage comprend en outre une surface de forme plane de section correspondant à la section de la cheminée centrale dans le cas où le récipient est un réacteur à cheminée centrale.

9. Appareillage selon l'une des revendications 1 à 8 qui comprend :
- un moteur solidaire de la trémie,
- un arbre sensiblement vertical (22) entraîné par le moteur,
- une tête de dispersion mise en rotation par ledit moteur comportant au moins trois plateaux (15, 16, 17, 18),
- une série d'au moins trois tubes fixes sensiblement en forme de cylindres concentriques, empilés et coaxiaux, démontables et coulissants, dans lesquels les solides divisés s'écoulent par gravité, chaque cylindre ayant son extrémité inférieure au-dessus d'un plateau, tous les cylindres ayant leur extrémité supérieure sensiblement au même niveau et en dessous du moyen de distribution formant diaphragme, le diamètre de chaque tube étant inférieur au diamètre du tube qui le surmonte et supérieur au diamètre du tube qu'il surmonte, chaque plateau étant ainsi associé à un tube autour duquel il tourne, le plateau inférieur tournant autour de l'arbre (22), une partie des solides divisés s'écoulant de chaque tube sur le plateau duquel il débouche, la partie de solide divisé qui tombe sur ce plateau étant soumise à un mouvement rotatif dû à la rotation du plateau sur lequel elle est tombée, la force centrifuge engendrée par la rotation des plateaux permettant d'éjecter ledit solide à des distances différentes de l'axe de l'arbre (22).

## Claims

1. An apparatus for filling a receptacle with at least a divided solid and comprising :
- a feeder hopper,
- a dispersion head comprising a series of plates (15, 16, 17, 18) which are substantially parallel and coaxial versus the central axis (22), and which are disposed above one another and the surface area of which diminishes from the upper plate (18) down to the lower plate (15), the distance between the edge and the central axis possibly varying for the same plate, the whole being so devised that each plate except the lower plate (15) comprises at lest one aperture to allow gravity feeding to the plate situated immediately beneath it, the lower plate (15) itself possibly comprising at least one aperture in order to feed the centre of the receptacle, the said plates being driven with a rotary movement which allows the eject ion of the said divided solid by centrifugal force, the angular speed of rotation of said plates being variable,
- at least one distribution mean (14) allowing by at least one aperture the passage of the divided solid from the hopper to the rotary plates, the said mean being placed at the outlet of the hopper and in front of the particle distribution plate and being characterized in that on the one hand the opening and on the other land the form of the passage section of the divided solid are adjustable by at least on adjustment mean which takes mainly into account the diameter of said receptable, the adjustment of the opening allowing to regulate the flow of the divided solid and the adjustment of the form allowing the selective feeding of the plates.

2. An apparatus according to claim 1 in which said adjustment mean comprises at least one a plate comprising between 2 and 20 apertures, said aperture being comprised in an angular area of an angle comprised between 15 and 45° of and a centre coincident with the central axis of rotation.

3. An apparatus according to claim 2 in which between 1 and 5 plates comprising angular areas, the plate being one above another.

4. An apparatus according to claim 3 in which the plates slide one in relation to the others.

5. An apparatus according to one of claims 1 to 4, in which at least one distribution mean comprises a crown covering at least the surface delimited between a disc having a radius being the minimal distance between the central axis, and the edge of said distribution mean and a disc having a radius being the greatest distance between the central axis and the edge of a rotary plate.

6. A apparatus according to claim 1 in which said adjustment mean comprises at least a plate contered on the said axis and pierced by holes disposed according to a central symmetry in relation to the central axis.

7. An apparatus according to claim 6 in which each hole has at least one of the following three shapes :
- a small hollowed disc,
- an oblong shape,
- an elliptical form.

8. An apparatus according to one of claims 1 to 7 in which said distribution mean comprises moreover a surface of plane form having a cross-section corresponding to the cross-section of the central chimney in the event of the receptacle being a reactor with a central chimney.

9. An apparatus according to one of claims 1 to 8, which comprises :
- a motor rigid with the hopper,
- a substantially vertical shaft (22) driven by the motor,
- a dispersion head which is caused to rotate by the said motor comprising at least three plates (15, 16, 17, 18),
- a series of at least three fixed tubes substantially in the form of concentric stacked and coaxial demountable and sliding cylinders in which the divided solids flow by gravity, each cylinder having its bottom end above a plate, all the cylinders having their upper ends substantially at the same level and below the distribution mean which forms diaphragm, the diameter of each tube being less than the diameter of the tube which surmounts it and greater than the diameter of the tube which it surmounts, each plate being thus associated with the tube about which it rotates, the lower plate turning about the shaft (22), apart of the divided solids flowing form each tube onto the plate form which it discharges, the part of divided solid which falls on this plate being subject to a rotary movement due to the rotation of the plate on which it has fallen, the centrifugal force engendered by rotation of the plates making it possible to eject the solids at different distances form the axis of the shaft (22).

## Patentansprüche

1. Apparatur zum Befüllen eines Behälters mit mindestens einem stückigem Feststoff, die folgendes umfaßt:
- einen Versorgungstrichter
- einen Verteilerkopf, der eine Reihe von etwa parallelen und bezüglich einer zentralen Achse(22) koaxialer Platten (15, 16, 17, 18) umfaßt, die untereinander angeordnet sind und deren Oberfläche sich von der obersten Platte (18) bis zur untersten Platte (15) verkleinert, der Abstand zwischen dem Rand und der zentralen Achse kann bei jeder einzelnen Platte variieren, wobei die Anodnung in der Art verstanden werden muß, daß jede Platte, mit Ausnahme der untersten Platte (15) eine Öffnung besitzt, die die Versorgung der direkt darunterliegenden Platte durch Gravitation erlaubt, die unterste Platte (15) selbst kann mindestens eine Öffnung besitzen, um die Mitte des Behälters zu versorgen, die besagten Platten sind in eine Rotationsbewegung versetzt, die das Ausschleudern des besagten stückigen Festkörpers durch Zentrifugalkraft erlaubt, wobei die Rotationsgeschwindigkeit der besagten Platten variabel ist,
- mindestens ein Mittel zum Verteilen (14), das das Hindurchtreten des stückigen Festkörpers des Trichters zu den rotierenden Platten durch mindestens eine Öffnung erlaubt und dadurch charakterisiert ist, daß einerseits die Öffnung und andererseits die Form des Querschnittes des Durchgangs des stückigen Feststoffs durch mindestens ein Mittel zum Regulieren, das hauptsächlich den Durchmesser des besagten Behälters berücksichtigt, regulierbar ist, wobei die Regulierung der Öffnung es erlaubt, den Durchsatz des stückigen Feststoffes zu regulieren und diejenige der Form es erlaubt, selektiv die Platten zu versorgen.

2. Apparatur nach Anspruch 1, dadurch gekennzeichnet, daß das besagte Mittel zum Regulieren mindestens eine zwischen 2 und 20 Öffnungen besitzende Platte umfaßt, wobei die besagte Öffnung auf einem Kreissektor mit einem Winkel zwischen 15 und 45° enthalten ist und ihr Mittelpunkt mit demjenigen der zentralen Achse zusammenfällt und die besagten Sektoren regelmäßig um die zentrale Achse angeordnet sind.

3. Apparatur nach Anspruch 2, bei der zwischen 2 und 5 übereinander liegende Platten mit Sektoren verwendet werden.

4. Apparatur nach Anspruch 3, bei der die besagten Platten so aneingerichtet sind, daß sie gegen die anderen verschiebbar sind.

5. Apparatur nach einem der Ansprüche 1 bis 4, bei der das besagte Mittel zum Regulieren einn Ring umfaßt, der durch den Kreis, dessen Radius der kleinste Abstand zwischen der zentralen Achse und dem Rand des besagten Mittels zum Regulieren ist und durch den Kreis, dessen Radius der größte Abstand zwischen der zentralen Achse und dem Rand einer rotierenden Platte ist, begrenzt wird.

6. Apparatur nach Anspruch 1, bei der das besagte Mittel zum Regulieren mindestens eine um die besagte Achse zentrierte und von Löchern, die bezogen auf die zentrale Achse symmetrisch angeordnet sind, durchlöcherte Platte umfaßt.

7. Apparatur nach Anspruch 6, bei der jedes Loch mindestens eine der drei folgenden Formen hat:
- eine kleine ausgesparte Scheibe,
- eine längliche Form,
- eine elliptische Form.

8. Apparatur nach einem der Ansprüche 1 bis 7, bei der das besagte Mittel zum Regulieren außerdem eine eben geformte Oberfläche mit einem Querschnitt, der dem Querschnitt des zentralen Einbaus besitzt, falls der Behälter ein Reaktor mit zentralem Einbau ist, aufweist.

9. Apparatur nach einem der Ansprüche 1 bis 8, die folgendes umfaßt:
- einen mit dem Trichter fest verbundenen Motor,
- eine etwa vertikale, durch den Motor angetriebene Welle (22),
- einen Verteilerkopf, der durch den besagten Motor in Rotation versetzt wird und mindestens drei Platten (15, 16, 17, 18) umfaßt,
- eine Serie von mindestens drei fixierten Rohren etwa in Form konzentrischer Zylinder, gestapelt und koaxial, demontierbar und verschiebbar, in denen die stückigen Feststoffe durch Schwerkraft herabfallen, wobei jeder Zylinder sein unteres Ende über einer Platte hat, und alle Zylinder ihr oberes Ende auf der selben Höhe und unter dem Mittel zum Verteilen haben, das eine Blende bildet, der Durchmesser jedes Rohres ist kleiner als der Durchmesser des Rohres, von dem es überragt wird, und größer als der des Rohres, das es selbst überragt, jede rotierende Platte arbeitet also mit einem Rohr zusammen, um das sie sich dreht, die unterste rotierende Platte dreht sich um die Welle (22), ein Teil des stückigen Feststoffs ergießt sich aus jedem Rohr auf die rotierende Platte, auf der es mündet, die stückigen Feststoffe, die auf diese rotierende Platte fallen, werden wegen der Rotation der Platte, auf die sie gefallen sind, einer Rotationsbewegung unterworfen und die Znetrifugalkraft, die durch die Rotation der Platten ausgeübt wird, erlaubt es, den stückigen Feststoff in verschiedene Abstände der Achse der Welle (22) zu schleudern.
